# EUROPEAN PATENT APPLICATION

(11) **EP 1 802 191 A2**
(43) Date of publication of application: **27.06.2007**
(21) Application number: 06256216.0
(22) Date of filing: 06.12.2006
(51) Int. Cl.: H05K 13/04, B05C 11/10, B05C 5/02, B05B 1/14, B05B 1/30

(54) **Jetting dispenser with multiple jetting nozzle outlets**

(30) Priority: 22.12.2005 US 315457
(71) Applicant: NORDSON CORPORATION, Westlake Ohio 44145-1148 (US)
(72) Inventor: Ahmadi, Mani, Oceanside, California 92057 (US); Babiarz, Alec, Encinitas, California 92024 (US); Ciardella, Robert, Rancho Santa Fe, California 92067 (US); Fang, Liang, San Diego, California 92126 (US); Fiske, Erik, Carlsbad, California 92008 (US); Quinones, Horatio, Carlsbad, California 92009 (US); Ratledge, Thomas, San Marcos, California 92078 (US)
(74) Representative: Findlay, Alice Rosemary

(57) **Abstract**

A jetting dispenser has a dispenser body with a fluid channel (14) and a fluid channel outlet (18) within the fluid channel. A valve member (22) is movable within the fluid channel (14) for selective contact with a valve seat (20) near the fluid channel outlet (18). A jetting nozzle is adapted to be coupled to the dispenser body, adjacent the channel outlet, and has a nozzle body (82) with a plurality of nozzle outlets in fluid communication with the channel outlet via a plurality of fluid passages through the nozzle body. The valve member is moved by a valve driver to contact the valve seat and impart momentum to liquid material supplied to the dispenser such that a plurality of droplets of liquid material are simultaneously jetted from the plurality of nozzle outlets.

## Description

The present invention generally relates to liquid material dispensing apparatus, and more particularly to a non-contact jetting dispenser for dispensing discrete amounts of liquid material to a substrate.

Liquid dispensing systems have become an integral part of the electronics manufacturing process for depositing underfill, encapsulants, solder fluxes, surface mount adhesives, conformal coatings, and other materials onto a substrate, such as a printed circuit board. Each liquid dispensing system used in the electronics manufacturing process has a particular dispensing characteristic that is determined in large measure by the desired liquid dispense pattern on the substrate, the liquid flow rate and/or liquid viscosity of the dispensed material, and the desired electronic component assembly throughput through the dispensing system.

For example, in the assembly of ball grid arrays (BGAs) and other electronic components onto a ceramic or flame-retardant, woven-glass epoxy (FR-4) substrate, the component must be soldered onto the substrate to form the necessary electrical interconnections. As each component occupies a predetermined area on the substrate, the liquid dispensing system must have the capability to dispense liquid or viscous material in a controlled manner within the selected component areas. Typically, the liquid dispenser is mounted on a movable platform to provide automated and accurate movement of the liquid dispenser in three dimensions relative to the substrate with the aid of a machine vision system. Alternatively, the liquid dispenser may be fixed in position and the substrate moved to direct placement of liquid material thereon.

Prior to the component soldering process for establishing the electrical interconnections, it is often necessary or at least desirable to dispense a layer of solder flux onto a substrate within specific areas associated with each component. To provide this capability, liquid material dispensers have been developed that use filled syringes or reservoirs of solder flux, and dispensing valves to dispense droplets of flux material onto the substrate in a controlled manner, with up to 25,000 to 40,000 dots or droplets of fluid per hour for a typical dispenser platform. These liquid dispensers, known as "dot jetting" dispensers, are programmed to dispense an array of viscous liquid or material droplets within each selected area. The droplets may be subsequently allowed to flow into contact with each other to form a generally thin layer of flux within the component area.

The throughput of conventional jetting dispensers is limited by the mechanical speed of the actuating mechanisms which create the droplets of liquid material that are jetted to a substrate. A need therefore exists for a jetting dispenser that overcomes the limitations associated with current jetting dispenser processes to provide higher throughput and to increase the efficiency and output of electronics manufacturing processes.

In one aspect of the invention, the jetting dispenser includes a dispenser body having a fluid channel and a valve member movably disposed within the fluid channel. A valve seat is disposed proximate an outlet of the fluid channel, and the valve member is moved within the channel by a valve driver for selective contact with the valve seat. A jetting nozzle is coupled to the dispenser body and has a plurality of nozzle outlets in communication with the channel outlet. When the valve member is moved to contact the valve seat, it imparts momentum to the liquid material in the fluid channel, thereby rapidly jetting a plurality of droplets of liquid material simultaneously from the plurality of nozzle outlets.

In another aspect of the invention, the plurality of nozzle outlets communicate with the fluid channel outlet via a corresponding plurality of fluid passages formed in a nozzle body of the nozzle. The geometries of the plurality of fluid passages through the nozzle body, and the geometries of the nozzle outlets may be selected to achieve desired droplet sizes jetted from the plurality of nozzle outlets. For example, the passages and outlets may be configured to achieve substantially uniformly sized droplets, or they may be configured to achieve differently sized droplets.

In yet another aspect of the invention, a method of dispensing liquid material comprises supplying the liquid material to a jetting dispenser having a plurality of liquid material outlets, imparting momentum to the liquid material in the dispenser, and simultaneously jetting a plurality of liquid droplets from the liquid material outlets in response to the momentum imparted to the liquid material.

The present invention provides a liquid dispensing system, or jetting dispenser, capable of simultaneously jetting multiple droplets of liquid material. The droplets may be dispensed to a substrate such that the droplets remain separate from one another, or it may be desired that the droplets merge or coalesce to form a bead or layer of liquid material. A jetting dispenser in accordance with the principles of the present invention therefore may achieve reduced cycle times and a multi-fold increase in throughput, compared to conventional jetting dispensers, and/or other desirable results.

For example, the quality of jetted droplets and the placement accuracy of the droplets on a substrate are related to the speed at which the dispenser is actuated to jet droplets of liquid material. Generally, slower actuation speeds result in higher quality droplets and more accurate placement. Because multiple droplets are simultaneously jetted in each actuation cycle from a single nozzle body of a dispenser in accordance with the principles of the present invention, the actuation speed can actually be reduced while maintaining or increasing the overall dispense rate, compared to conventional jetting dispensers that jet only a single droplet each actuation cycle. This slower actuation speed enables the dispenser to produce more accurate, better quality droplets.

The ability of a jetting dispenser in accordance with the principles of the present invention to simultaneously jet multiple droplets of liquid material also results in better repeatability in the placement of multiple droplets to a substrate, particularly in applications where the placement of all droplets can be accomplished in a single actuation of the dispenser. One example of such an application might be the simultaneous placement of all of the droplets of a surface mount adhesive, or other liquid material, required for mounting an electronic chip to a substrate.

The invention will now be further described by way of example with reference to the accompanying drawings in which:
FIG. 1 is a cross-sectioned elevation view of an exemplary liquid dispensing system in accordance with the principles of the present invention;
FIG. 2 is an enlarged detail of the liquid dispensing system of FIG. 1;
FIG. 3 is a perspective view of an exemplary nozzle body for use with the liquid dispensing system of FIG. 1;
FIG. 4 is a cross-sectioned elevation view of the nozzle body of FIG. 3;
FIGS. 5A-5E are cross-sectioned elevation views depicting exemplary embodiments of nozzle bodies in accordance with the principles of the present invention; and
FIGS. 6A-61 are bottom plan views depicting exemplary embodiments of nozzle bodies in accordance with the principles of the present invention.

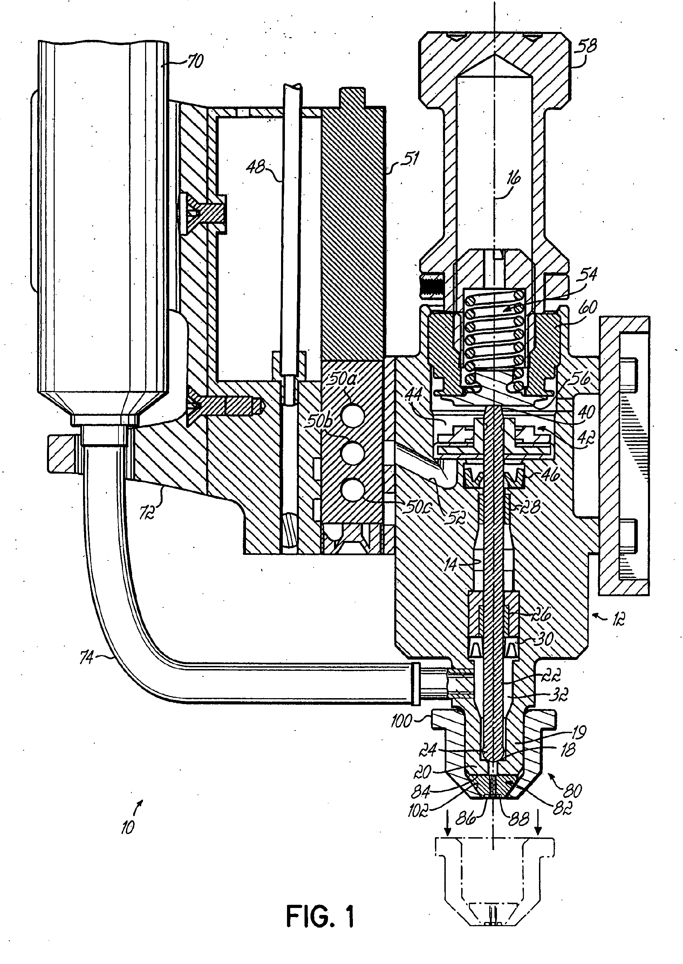

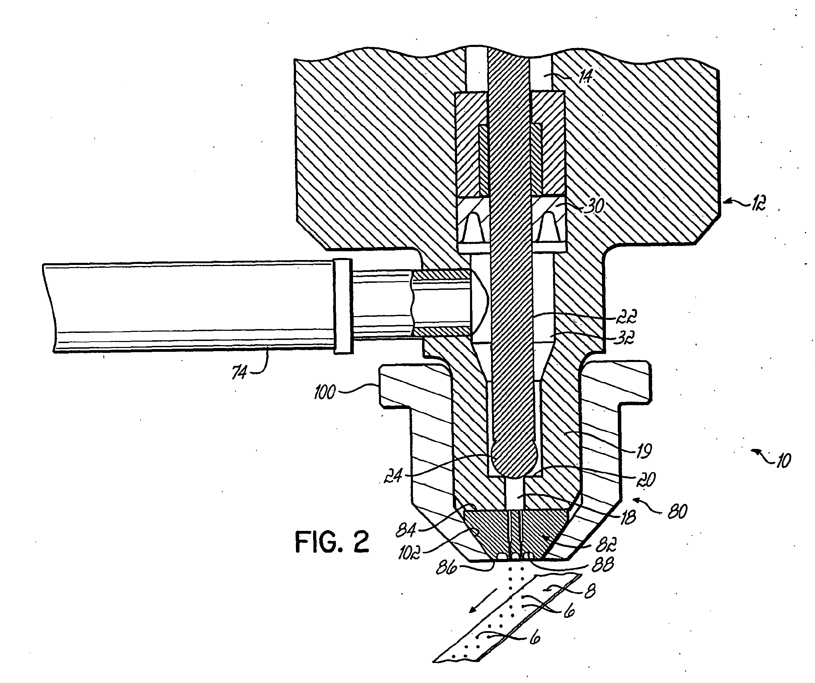

FIGS. 1 and 2 depict an exemplary liquid dispensing system 10 configured to jet droplets 6 of liquid material to a substrate 8. In the embodiment shown, substrate 8 is moved in the direction of the arrow to control the placement of droplets 6 on the substrate. It will be appreciated, however, that the dispensing system 10 may alternatively be moved relative to the substrate 8. Such liquid dispensing systems are commonly referred to as "jetting dispensers". One example of a jetting dispenser that may be used to carry out the invention is shown and described in co-pending PCT Application US2004/020247 (Publication No. WO 2005/009627) filed June 25, 2004, although it will be recognized that various other types of jetting dispensers could be used as well.

The jetting dispenser 10 depicted in FIGS. 1 and 2 comprises a dispenser housing 12 having an elongate bore or channel 14 formed therethrough and having a central axis 16 defined therealong. The dispenser housing 12 further includes a channel outlet 18 at a first end 19 of the housing 12, and a valve seat 20 proximate the channel outlet 18. A generally elongate valve stem or valve member 22 is reciprocally movably disposed within the channel 14 and is biased in a direction toward the channel outlet 18 such that a first end 24 of the valve member 22 normally contacts the valve seat 20. The valve member 22 is supported for sliding movement within the channel 14 by bushings 26, 28 provided along the channel 14. A seal 30 disposed in the channel 14 defines a fluid chamber 32 proximate the channel outlet 18.

The second end 40 of the valve member 22 is coupled to an air piston 42 that is slidably movable within a piston cavity 44 formed in the dispenser housing 12. A seal 46 is disposed between the piston cavity 44 and channel 14 and permits sliding movement of the valve member 22 therethrough while sealing the piston cavity 44 from the channel 14. High pressure air supplied from an air source (not shown) via conduit 48 is selectively directed by a solenoid valve 51 to and from the piston air cavity 44 through ports 50a, 50b, 50c and air passage 52 to rapidly move the air piston 42, and thus the valve member 22, as known in the art. A compression spring 54 acting through a load button 56 contacts the second end 40 of the valve member 22 and biases the valve member 22 in a direction toward the channel outlet 18. The amount of preload applied to the spring 54 can be adjusted by a rotatable knob 58 that is threadably coupled to a sleeve 60 that contains the spring 54.

The jetting dispenser 10 is supplied with pressurized, viscous material from a syringe-type supply device 70 that is supported by a syringe holder 72 mounted to the dispenser housing 12. Generally, the viscous material may be any highly-viscous material including, but not limited to, solder flux, solder paste, adhesives, solder mask, thermal compounds, oil, encapsulants, potting compounds, inks and silicones. While the jetting dispenser 10 is shown and described herein as having a syringe-type liquid supply device 70, it will be appreciated that the jetting dispenser 10 may alternatively be coupled to various other sources of liquid material. The syringe-type supply 70 is in fluid communication with the dispenser housing 12 channel via a fluid conduit 74 that supplies liquid material under relatively low pressure from the supply 70 to the fluid chamber 32 defined in the dispenser housing channel 14. Liquid material from the syringe-type supply 70 enters and fills the fluid chamber 32 of channel 14, and with the valve member 22 normally contacting the valve seat 20, the liquid material is blocked from exiting the housing 12 through the channel outlet 18.

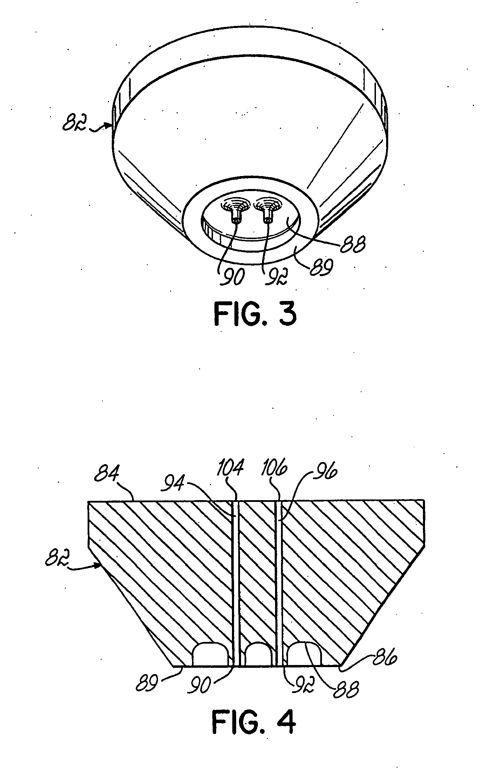

With continued reference to FIGS. 1 and 2, and referring further to FIGS. 3 and 4, the jetting dispenser 10 further includes a nozzle assembly 80 removably coupled to the first end 19 of the dispenser housing 12, adjacent the channel outlet 18. In the embodiment shown, the nozzle assembly 80 includes a nozzle body 82 having a first side 84 adapted to sealingly engage the first end 19 of the dispenser housing 12, adjacent the channel outlet 18, and a second end 86, having a dispensing surface 88. While conventional jetting dispensers have utilized only a single nozzle outlet, nozzle bodies in accordance with the principles of the present invention include a plurality of nozzle outlets formed on the dispensing surface, through which multiple droplets 6 of liquid material are simultaneously jetted to a substrate 8. For example, nozzle body 82 depicted in FIGS. 3 and 4 includes first and second nozzle outlets 90, 92 on dispensing surface 88. The nozzle outlets 90, 92 are in fluid communication with the channel outlet 18 by respective first and second fluid passages 94, 96 that extend through the nozzle body 82 between the first and second ends 84, 86. In this embodiment, nozzle outlets 90, 92 exit from raised lands that project from dispensing surface 88, and the raised lands are protected by a raised rim 89 circumscribing the lands, as will be described more fully below.

The nozzle body 82 is removably secured to the first end 19 of the dispenser housing 12 by a removable collar 100 that constitutes a component of nozzle assembly 80. In the embodiment shown, the collar 100 is a generally cupped-shaped member having internal screw threads (not shown) formed along the inner side walls for threadably engaging corresponding external screw threads (not shown) formed on the first end 19 of the dispenser housing 12. A lower interior portion 102 of the collar 100 is configured to engage the nozzle body 82 such that the first end 84 of the nozzle body 82 may be clamped tightly against the dispenser housing 12, adjacent the channel outlet 18. In the embodiment shown, the nozzle body 82 has a generally frustoconical shape that tapers in the direction of the dispensing surface 88, and the lower interior portion 102 of the collar 100 has sloped sidewalls that correspond to the taper of the nozzle body 82. While the nozzle body 82 is shown and described herein as being removably couplable to the dispenser housing 12 by a threaded collar 100, it will be recognized that various other methods for securing a nozzle body to the dispenser housing 12 may alternatively be used.

With continued reference to FIGS. 1-4, the fluid passages 94, 96 formed through the nozzle body 82 are arranged such that inlets 104, 106 to the fluid passages 94, 96 are disposed adjacent the channel outlet 18 of the dispenser housing 12. When it is desired to dispense liquid material, the valve member 22 is retracted away from the valve seat 20, and the relatively low pressure applied to the liquid material in the syringe-type supply 70 causes the liquid material to flow through the conduit 74 and into the fluid chamber 32, filling the volume previously occupied by the valve member 22. In use, the jetting dispenser 10 will have been primed so that liquid material also resides in the fluid passages 94, 96 of the nozzle body 82. Due to the viscous nature of the liquid material, no liquid material is dispensed when the valve member 22 is retracted; the pressure applied to syringe-type supply 70 is only sufficient to fill the void created by retracting the valve member 22.

In the embodiment shown, the valve member 22 is moved by actuating the solenoid valve 51 to supply high pressure air to the piston cavity, as discussed above, to overcome the bias force of the spring 54. The solenoid 51 is then actuated to discharge air from the piston cavity 44 and the valve member 22 is rapidly moved back into contact with the valve seat 20 by the bias force of the spring 54. This rapid movement, and the subsequent sudden stop of the valve member 22 against the valve seat 20, imparts momentum to the fluid then residing in the channel outlet 18 and fluid passages 94, 96. The momentum imparted to the liquid material as the valve member 22 impacts the valve seat 10 propagates through the liquid, from the channel outlet 18 and through the plurality of fluid passages 94, 96 in the nozzle body 82, causing individual droplets 6 of liquid material to be separated and jetted from the plurality of nozzle outlets 90, 92 in a direction toward the substrate. In this manner, a plurality of liquid droplets 6 is simultaneously jetted from the single channel outlet 18 and through the nozzle body. In use, the solenoid 51 may be actuated in rapid succession to thereby dispense a series of jetted droplets 6 from each outlet 90, 92.

As the momentum propagates through the liquid material, a differential pressure is created in the liquid material. This pressure differential may not be uniform at the respective inlets 104, 106 to each fluid passage 94, 96 in the nozzle body 82, particularly when the arrangement of the plurality of fluid passages 94, 96 is such that not all inlets 104, 106 are equidistant from the channel outlet 18. Due to the small size of the droplets 6 jetted by the dispenser 12, even a small difference in pressure can affect the relative size of droplets 6 jetted from the respective outlets 90, 92. Accordingly, it may be desirable to adjust the geometry of the respective fluid passageways 104, 106 and nozzle outlets 90, 92 to achieve a desired droplet size. Various exemplary modifications to the respective configurations of the plurality of fluid passages 94, 96 and outlets 90, 92 will now be described.

The nozzle body depicted in FIGS. 1 through 4 has first and second liquid passages 94, 96 which extend substantially parallel to the central axis 16 of the dispenser 10 and which have substantially equal cross-sectional dimensions. When the pressure distribution through the liquid material is substantially uniform at the inlets 104, 106 to the respective fluid passages 94, 96, this configuration of nozzle body 82 may be utilized to simultaneously jet multiple droplets 6 of liquid material wherein the droplets 6 will be substantially the same size. If the pressure at the inlets 104, 106 to the respective fluid passages 94, 96 is not uniform, the droplets 6 jetted from the respective nozzle outlets will generally not be uniformly sized.

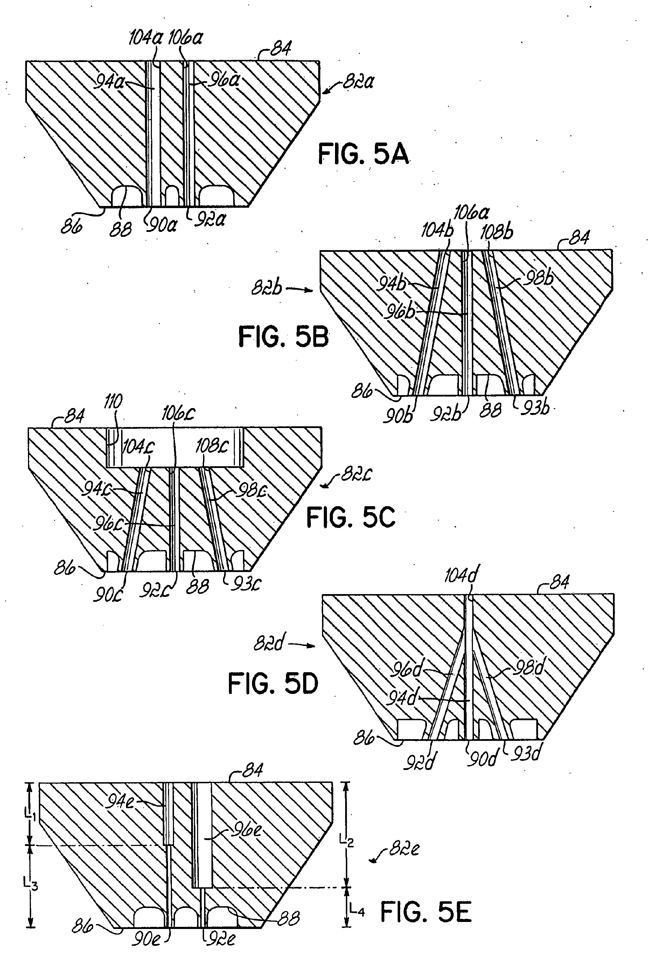

FIG. 5A depicts an alternative embodiment wherein a first fluid passage 94a through the nozzle body 82a has a flow area cross-sectional flow area that is greater than the cross-sectional flow area of a second fluid passage 96a through the nozzle body 82a. When the pressure of the liquid material is substantially uniform at the inlets 104a, 106a to the first and second fluid passages 94a, 96a, it will be appreciated that differently sized droplets 6 of liquid material will be jetted from the first and second outlets 90a, 92a associated with the first and second fluid passages 94a, 96a of the nozzle body 82a. However, if the distribution of pressure in the liquid material proximate the inlets 104a, 106a to the first and second fluid passages 94a, 96a through the nozzle body 82a is not uniform, the differently sized cross-sectional areas of the first and second passages 94a, 96a may be utilized to account for this variation in liquid pressure, such that the size of the jetted droplets 6 can be controlled. For example, if the pressure of the liquid at the inlet 104a to the first fluid passage 94a is lower than the pressure of the liquid at the inlet 106a to the second fluid passage 96a, the greater cross-sectional flow area of the first fluid passage 94a relative to the cross-sectional flow area of the second fluid passage 96a may be selected such that the droplets 6 jetted from the respective first and second outlets 90a, 92a of the nozzle body 82a will be substantially the same size.

FIG. 5B depicts another alternative embodiment of a nozzle body 82b having first, second and third fluid passages 94b, 96b, 98b communicating with respectively associated first, second and third outlets 90b, 92b, 93b in the dispensing surface 88 of the nozzle body 82b. In this embodiment, the second liquid passage 96b extends along a direction substantially parallel to the central axis 16 of the channel 14 (FIG. 1), while the first and third fluid passages 94b, 98b extend along directions that are oblique to the second fluid passage 96b and the central axis 16 of the channel 14. In this embodiment, the overall length of the first and third fluid passages 94b, 98b will be longer than the overall length of the second fluid passage 96b, as a result of their oblique orientation.

When each of the first, second and third fluid passages 94b, 96b, 98b has substantially the same cross-sectional flow area, the first and third fluid passages 94b, 98b will exhibit a slightly increased fluid resistance as a result of the increased passage length, compared to the second fluid passage 96b. Accordingly, the relationship between the lengths of the fluid passages 94b, 96b, 98b may be utilized to control the relative sizes of the droplets 6 of liquid material jetted from the respective nozzle outlets 90b, 92b, 93b when the liquid material pressure at the respective inlets 104b, 106b, 108b to the fluid passages is substantially the same. For example, the increased fluid resistance in fluid passages 94b and 96b will cause droplets 6 jetted from their respective nozzle outlets 90b, 93b to be smaller than the droplets 6 jetted from nozzle outlet 92b. Alternatively, the relative lengths of the respective fluid passages 94b, 96b, 98b may be utilized to develop substantially similarly sized liquid droplets 6 when the pressure distribution in the liquid at the respective inlets 104b, 106b, 108b to the fluid passages is not the same. The configuration of fluid passages depicted in FIG. 5B is also useful to provide greater spacing between jetted droplets 6 of liquid material dispensed from the single fluid channel outlet 18.

FIG. 5C depicts another exemplary embodiment of a nozzle body 82c having first, second and third fluid passages 94c, 96c, 98c and associated first, second and third nozzle outlets 90c, 92c, 93c. The nozzle body 82c further includes a recess 110 formed into the first end 84 of the nozzle body 82c, thereby creating a well for feeding each of the fluid passages 94c, 96c, 98c. While the fluid passages 94c, 96c, 98c are depicted such that the second fluid passage 96c extends in a direction that is substantially parallel to the central axis 16 of the channel 14 (FIG. 1) and wherein the first and third fluid passages 96c, 98c extend along directions oblique to the central axis 16 of the channel 14, as described above with respect to FIG. 5B, it will be recognized that the fluid passages 94c, 96c, 98c may alternatively be parallel to one another and extend substantially along a direction parallel to the central axis 16 of the channel 14. In the embodiment shown, the first and third fluid passages 94c, 98c have lengths which are greater than the length of the second fluid passage 96c, whereby the lengths and relative sizes of the cross-sectional flow areas of the passages 94c, 96c, 98c may be selectively configured to dispense jetted droplets 6 of liquid material, as described above with respect to the nozzle bodies 82a, 82b of FIGS. 5A and 5B. The geometry and size of the recess 110 relative to the passages 94c, 96c, 98c may also selected to facilitate tuning the passages to achieve a desired size droplet 6 from the respective nozzle outlets 90c, 92c, 93c.

FIG. 5D depicts yet another exemplary embodiment of a nozzle body 82d. In this embodiment, a first fluid passage 94d extends between the first and second ends 84, 86 of the nozzle body 82d and communicates with a first nozzle outlet 90d. Additional, second and third fluid passages 96d, 98d branch off of the first fluid passage 94d and extend to the second end 86 of the nozzle body and respectively associated second and third nozzle outlets 92d, 93d. In this embodiment, the momentum of the liquid material enters the single inlet 104d to the first fluid passage 94d and is subsequently split between the first, second and third fluid passages 94d, 96d, 98d at the point where the second and third fluid passages 96d, 98d branch off from the first fluid passage 94d. This embodiment may be advantageous to minimize pressure variations in the liquid material as the momentum of the fluid propagates from the fluid channel outlet 18 (FIG. 1) and into the fluid passages 94d, 96d, 98d of the nozzle body 82d. Moreover, the relative lengths of the respective fluid passages 94d, 96d, 98d may be selected to account for any pressure variations in the liquid material in each of the fluid passages 94d, 96d, 98d, as discussed above. For example, FIG. 5D depicts a configuration wherein the second and third fluid passages 96d, 98d branch from a common location on the front fluid passage 94d. It will be appreciated that the points where the second and third fluid passages 96d, 98d branch from the first fluid passage 94d may be modified to obtain different lengths for each passage. The relative cross-sectional flow areas of the passages 94d, 96d, 98d may also be selected to be the same or different from one another. In this manner, the respective fluid passages 94d, 96d, 98d may be configured to achieve a desired droplet size jetted from the respective nozzle outlets 90d, 92d, 93d.

FIG. 5E depicts yet another exemplary embodiment of a nozzle body 82e. In this embodiment, the nozzle body 82e includes first and second fluid passages 94e, 96e wherein each fluid passage 94e, 96e has a first length L1, L2 having a first cross-sectional flow area, and a second length L3, L4 having a second cross-sectional area different from the first cross-sectional flow area. In the embodiment shown, the first cross-sectional flow areas along the first lengths L1, L2 of the first and second passages 94e, 96e are greater than the second cross-sectional flow areas along the second lengths L3, L4, however, it will be recognized that the first cross-sectional flow areas along the first lengths L1, L2 may alternatively be sized smaller than the second cross-sectional flow areas along the second lengths L3, L4 of the passages 94e, 96e. The relative sizes of the first cross-sectional flow areas along the first lengths L1, L2 of the first and second fluid passages 94e, 96e may be the same or may be different, and the second cross-sectional flow areas along the second lengths L3, L4 of the first and second fluid passages 94e, 96e may also be the same or different. Moreover, the respective first and second lengths L1, L2 and L3, L4 of the first and second fluid passages 94e, 96e may be made the same or different. Each of these potential variations in fluid passage geometry allows each of the fluid passages 94e, 96e to be tuned to achieve a desired droplet size jetted from the respective nozzle outlets 90e, 92e.

While several exemplary embodiments of nozzle bodies for a jetting dispenser 10 having a plurality of fluid passages and associated nozzle outlets have been described above, it will be recognized that various other geometry modifications and combinations thereof are possible. It will also be recognized that while various exemplary nozzle bodies have been shown and described with two or three fluid passages and associated nozzle outlets, nozzle bodies having even greater numbers of fluid passages and associated nozzle outlets may also be provided.

When jetting droplets 6 of liquid from a nozzle of a jetting dispenser 10, it is generally desirable that the exit plane at the nozzle outlet have a relatively low surface area to permit the droplets 6 of liquid material to be jetted cleanly from the nozzle outlet. In particular, larger exit plane surface areas tend to cause liquid material to wick out along the exit surface. This liquid material residing on the exit surface can accumulate contaminants from the environment which may not be desirable in the jetted droplets 6 of liquid material. Moreover, any liquid material accumulating on the exit surface can skew the path of a droplet 6 jetted from the outlet from its intended direction.

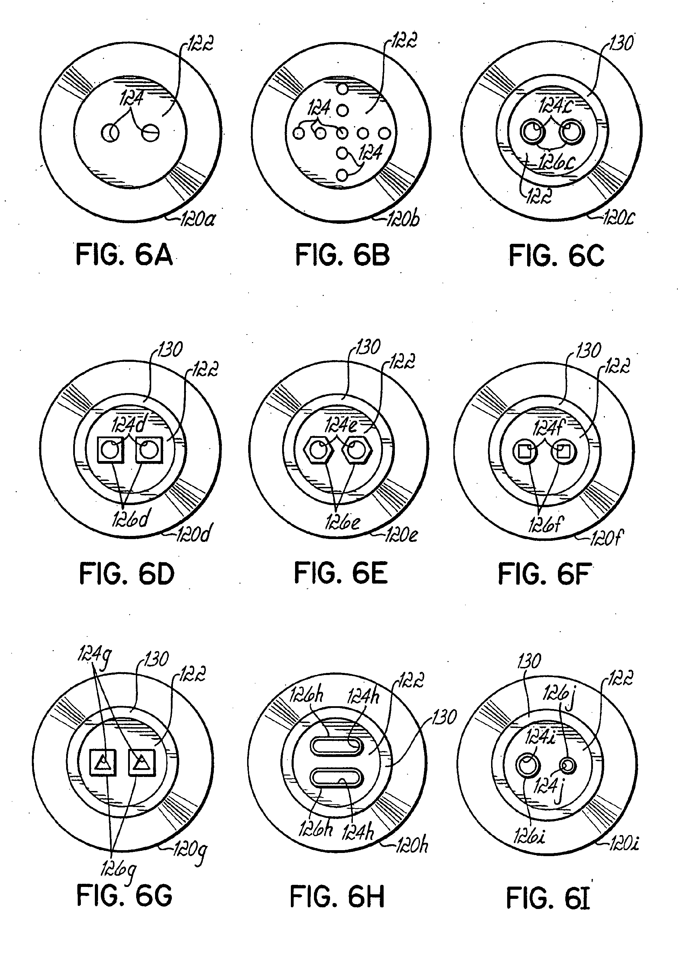

FIGS. 6A-61 depict various exemplary embodiments of nozzle bodies 120a-120i having a plurality of nozzle outlets in the dispensing surface 122. FIGS. 6A and 6B depict end views of frustoconically-shaped nozzle bodies 120a, 120b similar in shape to the nozzle body 82 of FIGS. 3 and 4, but wherein the exit plane of the nozzle outlets 124 is in the plane of dispensing surface 122. In this embodiment, the areas of the dispensing surfaces 122 are reduced only by the tapered shape of the nozzle bodies 120a, 120b.

FIGS. 6C through 61 depict embodiments of nozzle bodies 120c-120i wherein the area of the exit plane of the nozzle outlets is even further reduced by raised lands which surround the nozzle outlets and project outwardly from the dispensing surface 122. The nozzle bodies further include an optional raised rim 130 to protect the raised lands from inadvertent impact with other objects. FIG. 6C depicts an embodiment similar to the nozzle body in FIGS. 1-4, wherein the nozzle outlets 124c have generally circular cross-sectional flow areas and wherein generally circular, annular lands 126c are formed about the respective nozzle outlets 124c. While this embodiment provides greatly reduced exit plane areas, the generally circular lands 126c may be difficult or time consuming to manufacture. FIG. 6D depicts an embodiment wherein the nozzle outlets 124d have generally circular cross-sectional flow areas and wherein the lands 126d have generally rectangular shapes. In this embodiment, the areas of the exit planes of the respective nozzle outlets 124d is greater than that provided by the lands 126c of the embodiment of FIG. 6C, when the nozzle outlets 124c, 124d are equally sized, but the configuration of FIG. 6D lends itself to fabrication by machining the desired land shapes.

FIG. 6E depicts an embodiment of a nozzle body 120e wherein generally circular nozzle outlets 124e are surrounded by generally hexagonally-shaped lands 126e. This embodiment represents a compromise between the embodiments of FIGS. 6C and 6D for similarly sized nozzle outlets 124c, 124d, 124e. In particular, the size of the lands 126e of FIG. 6E is less than the area of the lands 126d of FIG. 6D, but slightly greater than the area of the lands 126c of FIG. 6C. However, the configuration of the lands 126e of FIG. 6E may be easier to manufacture, for example, by CNC machining, than the configuration of FIG. 6C, while being only slightly more difficult to manufacture compared to the configuration of FIG. 6D. The nozzle bodies may also be manufactured by various other methods, such as by die casting or by forming a composite assembly with capillaries that are pressed, brazed, or glued into a nozzle body, for example, to obtain the desired configuration.

FIGS. 6F, 6G and 6H depict embodiments of nozzle bodies 120f, 120g 120h wherein the nozzle outlets 124f, 124g, 124h have cross-sectional flow areas that are noncircular. FIG. 6F depicts an embodiment wherein the nozzle outlets 124f have generally square shapes and are surrounded by raised lands 126f having generally circular shapes. FIG. 6G depicts an embodiment wherein the nozzle outlets 124g have generally triangular shapes and are surrounded by raised lands 126g having generally rectangular shapes. FIG. 6H depicts another embodiment of an exemplary nozzle body 120h wherein the nozzle outlets 124h and their respectively associated lands 126h have generally oval or elliptical shapes.

While circular, oval, rectangular and triangular shapes of the nozzle outlets 124g are shown and described herein, it will be recognized that various other geometric shapes are also possible. Moreover, numerous variations in the geometries of the nozzle outlets and the respectively associated lands are possible.

The nozzle body embodiments of FIGS. 6A through 6H depict nozzle outlets and associated lands which are substantially the same size and shape, however, it will be recognized that a nozzle body may alternatively be formed wherein each of the plurality of nozzle outlets and/or associated lands has different shapes. Moreover, each of the nozzle outlets and associated lands on a given nozzle body may be sized differently than other nozzles and/or lands on the nozzle body. For example, FIG. 61 depicts an embodiment of a nozzle body 120i, similar to the nozzle body 120c of FIG. 6C, but wherein a first one of the nozzle outlets 124i and its associated land 126i is larger than a second one of the nozzle outlets 124j and its associated land 126j.

While the present invention has been illustrated by the description of an embodiment thereof, and while the embodiment has been described in considerable detail, additional advantages and modifications will readily appear to those skilled in the art.

Additional clauses defining the invention are:
1. The jetting dispenser further comprising a dispensing surface on said nozzle body, and at least one raised land projecting from said dispensing surface and surrounding at least one of said nozzle outlets.
2. The jetting dispenser of clause 1, wherein said raised land has a geometric shape that is different from the cross-sectional shape of its associated nozzle outlet.
3. The jetting dispenser of clause 1, further comprising a raised rim projecting from said dispensing surface and circumscribing said nozzle outlets.
4. A method of dispensing liquid material, comprising supplying liquid material to a jetting dispenser having a plurality of liquid material outlets, imparting momentum to a quantity of liquid material in the dispenser, and simultaneously jetting a plurality of liquid droplets from the liquid material outlets in response to the momentum imparted to the liquid material.
5. The method of clause 4, further comprising jetting the plurality of liquid droplets in substantially uniform sizes.
6. The method of clause 4, further comprising jetting at least one of the plurality of liquid droplets in a size that is different from at least one other of said plurality of liquid droplets.

## Claims

1. A jetting dispenser, comprising a dispenser body couplable to a source of liquid material, said dispenser body having a fluid channel, a fluid channel outlet communicating with said fluid channel, and a valve seat proximate said fluid channel outlet, a valve member movably disposed in said fluid channel for selective contact with said valve seat, a valve driver operably coupled to said valve member and operable to selectively move said valve member out of and into contact with said valve seat, and a jetting nozzle coupled to said dispenser body adjacent said channel outlet, said jetting nozzle comprising a nozzle body, and a plurality of nozzle outlets on said nozzle body communicating with said fluid channel outlet, said valve member imparting sufficient momentum to liquid material in said fluid channel outlet upon contact with said valve seat to rapidly jet a plurality of droplets of liquid simultaneously from said plurality of nozzle outlets.

2. The jetting dispenser of claim 1, further comprising a plurality of fluid passages through said nozzle body and providing fluid communication between said fluid channel outlet and said nozzle outlets.

3. The jetting dispenser of claim 2, wherein at least one of said fluid passages has a cross-sectional area that is different from at least one other one of said fluid passages.

4. The jetting dispenser of either claim 2 or claim 3, wherein at least one of said fluid passages has a length that is different from at least one other one of said fluid passages.

5. The jetting dispenser of any one of claims 2 to 4, wherein said plurality of fluid passages comprises at least one main passage communicating with said fluid channel outlet and at least one branch passage extending from said main passage.

6. The jetting dispenser of any one of claims 2 to 5, wherein at least one of said fluid passages has a first passage length and a second passage length, said first passage length having a cross-sectional area that is different from said second passage length.

7. The jetting dispenser of claim 6, wherein said at least one of said fluid passages has a first passage length that is different from a first passage length of at least one other one of said fluid passages having a first passage length and a second passage length.

8. The jetting dispenser of any one of claims 2 to 7, wherein said plurality of fluid passages are substantially parallel.

9. The jetting dispenser of any one of claims 2 to 7, wherein at least one of said fluid passages extends along a direction that is oblique to at least one other one of said fluid passages.

10. The jetting dispenser of any one of claims 2 to 9, further comprising a recess formed in said nozzle body and providing fluid communication between said fluid channel outlet and said plurality of fluid passages in said nozzle body when said jetting nozzle is coupled to said dispenser body.
